# EUROPEAN PATENT APPLICATION

(11) **EP 4 733 330 A1**
(43) Date of publication of application: **29.04.2026**
(21) Application number: 24835996.0
(22) Date of filing: 28.06.2024
(51) Int. Cl.: C08F 14/24

(54) **POLYCHLOROTRIFLUOROETHYLENE, AND METHOD FOR PRODUCING POLYCHLOROTRIFLUOROETHYLENE**

(30) Priority: 05.07.2023 JP 2023110904
(71) Applicant: Daikin Industries, Ltd., Osaka-shi, Osaka 530-0001 (JP)
(72) Inventor: YAMAZAKI, Keiko, Osaka-Shi, Osaka 530-0001 (JP); IMAMURA, Hitoshi, Osaka-Shi, Osaka 530-0001 (JP); HAMADA, Hiroyuki, Osaka-Shi, Osaka 530-0001 (JP); FUJISAWA, Manabu, Osaka-Shi, Osaka 530-0001 (JP)
(74) Representative: Hoffmann Eitle
(86) International application number: PCT/JP2024/023638
(87) International publication number: WO 2025/009483

(57) **Abstract**

Provided is a polychlorotrifluoroethylene containing chlorotrifluoroethylene unit, wherein a content of chlorotrifluoroethylene unit is 95.0 to 100 mol% relative to all monomer units, and a ratio, (A)/(B), of a peak area (A) derived from a double bond relative to a peak area (B) derived from a main backbone is 0.020% or less.

## Description

### TECHNICAL FIELD

The present disclosure relates to a polychlorotrifluoroethylene and a method for manufacturing a polychlorotrifluoroethylene.

### BACKGROUND ART

Patent Document 1 describes a method for improving heat resistance of a chlorotrifluoroethylene polymer by treating the chlorotrifluoroethylene polymer with a fluorinating agent.

### RELATED ART

### PATENT DOCUMENTS

Patent Document 1: Japanese Patent Laid-Open No. 5-170811

### SUMMARY OF THE INVENTION

### PROBLEM TO BE SOLVED BY THE INVENTION

An object of the present disclosure is to provide a polychlorotrifluoroethylene having excellent oxidation resistance.

### MEANS FOR SOLVING THE PROBLEM

The present disclosure provides a polychlorotrifluoroethylene comprising chlorotrifluoroethylene unit, wherein a content of chlorotrifluoroethylene unit is 95.0 to 100 mol% relative to all monomer units, and a ratio, (A)/(B), of a peak area (A) derived from a double bond relative to a peak area (B) derived from a main backbone is 0.020% or less.

### EFFECTS OF INVENTION

The present disclosure can provide the polychlorotrifluoroethylene having excellent oxidation resistance.

### DESCRIPTION OF EMBODIMENTS

Hereinafter, specific embodiments of the present disclosure will be described in detail, but the present disclosure is not limited to the following embodiments.

Known fluororesins having excellent chemical resistance and gas-barrier property include polychlorotrifluoroethylene (PCTFE). Patent Document 1 states that treating PCTFE with a fluorinating agent improves heat resistance of PCTFE. However, a method for improving oxidation resistance of PCTFE has not been investigated.

Contacting between an oxidizing agent such as a piranha solution and PCTFE causes a problem of deteriorating durability of PCTFE against a stress. Investigation by the present inventors has found that double bonds present in PCTFE affect the oxidation resistance of PCTFE and that reducing an amount of the double bonds present in PCTFE remarkably improves the oxidation resistance of PCTFE.

Specifically, PCTFE of the present disclosure is PCTFE containing chlorotrifluoroethylene (CTFE) unit at 95 to 100 mol% relative to all monomer units, in which a ratio ((A)/(B)) of a peak area (A) derived from a double bond relative to a peak area (B) derived from a main backbone is 0.020% or less.

Hereinafter, a configuration of PCTFE of the present disclosure will be described in detail.

### (PCTFE)

PCTFE of the present disclosure is characterized in that a ratio ((A)/(B)) of a peak area (A) derived from a double bond relative to a peak area (B) derived from a main backbone is 0.020% or less.

The ratio ((A)/(B)) of the peak area (A) derived from the double bond relative to the peak area (B) derived from the main backbone indicates a proportion of the double bonds present in the main chain of PCTFE. A lower ratio ((A)/(B)) indicates a lower amount of the double bonds present in the main chain of PCTFE. The ratio ((A)/(B)) is preferably 0.015% or less, and more preferably 0.012% or less in terms of furthermore improvement of the oxidation resistance of PCTFE.

CTFE is prepared by, for example, dechlorinating trifluorotrichloroethane. In this case, CF₂=CHCl and CH₂=CHF are inevitably generated as impurity monomers. When CTFE (CF₂=CFCl) is polymerized to manufacture PCTFE, incorporating these impurity monomers into the main chain of PCTFE together with CTFE easily advances a hydrogen fluoride-eliminating reaction or a hydrogen chloride-eliminating reaction to form double bonds in PCTFE. It has been now identified that this presence of the double bonds is a cause of deteriorating the oxidation resistance of PCTFE.

The peak area (A) is an area of a peak that is derived from the double bond and that appears on a ¹⁹F-NMR spectrum of PCTFE. When a plurality of peaks derived from the double bonds appear, areas of all the peaks are summed. The peak derived from the double bonds typically appears within chemical shift regions of -144 to -153 ppm and -176 to -188 ppm on the ¹⁹F-NMR spectrum of PCTFE.

The peak area (B) is an area of a peak that is derived from the main backbone and that appears on the ¹⁹F-NMR spectrum of PCTFE. When a plurality of peaks derived from the main backbone appear, areas of all the peaks are summed. The main backbone of PCTFE refers to a main chain backbone constituted with a carbon chain. The peak derived from the main backbone typically appears within a chemical shift region of -75 to - 144 ppm on the ¹⁹F-NMR spectrum of PCTFE.

A flow value of PCTFE is preferably 0.3 to 2.5 × 10⁻³ cm³/sec, more preferably 2.0 × 10⁻³ cm³/sec or less, further preferably 1.5 × 10⁻³ cm³/sec or less, and furthermore preferably 1.0 × 10⁻³ cm³/sec or less in terms of furthermore improvement of the oxidation resistance of PCTFE.

The flow value of PCTFE can be measured by using a Takashita-type flow tester under conditions at 230°C, a load of 980 N (100 kg), and a nozzle diameter of 1 mmϕ. The flow value of PCTFE is a volume of PCTFE extruded per second through the nozzle.

A melting point of PCTFE is preferably 150°C or higher, more preferably 190°C or higher, preferably 230°C or lower, and more preferably 217°C or lower. The melting point is a temperature corresponding to a maximum value on a heat-of-fusion curve when a temperature is raised at a rate of 10°C/min by using a differential scanning calorimeter [DSC].

PCTFE is not limited as long as PCTFE contains CTFE unit, and may be any of: a CTFE homopolymer; and a polymer containing CTFE unit and a comonomer unit (except for CTFE unit).

A content of CTFE unit in PCTFE is 95.0 to 100 mol% or more, preferably 98.0 mol% or more, more preferably 99.0 mol% or more, and further preferably 99.9 mol% or more relative to all the monomer units.

A comonomer to constitute the comonomer unit that can be contained in PCTFE is not limited as long as it is a monomer copolymerizable with CTFE. Examples thereof include ethylene, vinylidene fluoride, tetrafluoroethylene, hexafluoropropylene, a fluoro(alkyl vinyl ether), (perfluorobutyl)ethylene, (perfluorohexyl)ethylene, perfluoro(1,1,2-trihydro-1-hexene), and perfluoro(1,1,5-trihydro-1-pentene). In one embodiment, the comonomer is a monomer other than CF₂=CHCl and CF₂=CHF.

The monomeric composition of PCTFE can be measured by a ¹⁹F-NMR method.

### (Method for manufacturing PCTFE)

PCTFE of the present disclosure can be manufactured by a method for manufacturing PCTFE including polymerizing a monomer mixture containing CTFE, in which the content of CF₂=CHCl and CF₂=CHF in the used monomer mixture is 250 mol-ppm or less relative to the monomer mixture.

The content of CF₂=CHCl and CF₂=CHF in the monomer mixture is preferably 200 mol-ppm or less, more preferably 160 mol-ppm or less, and further preferably 120 mol-ppm or less relative to the monomer mixture in terms of furthermore improvement of the oxidation resistance of the obtained PCTFE. The lower limit of the content of CF₂=CHCl and CF₂=CHF is not limited, and may be 0.1 mol-ppm or more, may be 10 mol-ppm or more, and may be 20 mol-ppm or more, for example.

The content of CF₂=CHCl and CF₂=CHF in the monomer mixture can be measured with a gas chromatograph.

The monomer mixture in which the content of CF₂=CHCl and CF₂=CHF is within the above range can be prepared by, for example, distilling a crude composition containing CTFE, CF₂=CHCl, and CF₂=CHF to reduce the content of CF₂=CHCl and CF₂=CHF in the crude composition.

The crude composition can be distilled by a known method. For example, as described in Preparation Example 2 described later, the content of CF₂=CHCl and CF₂=CHF in the crude composition can be sufficiently reduced by rectification using a plurality of rectifying towers with a large heating amount and a high reflux ratio.

The crude composition containing CTFE, CF₂=CHCl, and CF₂=CHF can be prepared by a known method such as a method of dechlorinating trifluorotrichloroethane. In the known method for preparing CTFE, CF₂=CHCl and CF₂=CHF are typically and naturally generated. Therefore, using the known method for preparing CTFE typically yields CTFE as the crude composition containing CF₂=CHCl and CF₂=CHF in addition to CTFE.

The content of CF₂=CHCl and CF₂=CHF in the crude composition is typically more than 250 mol-ppm, may be 270 mol-ppm or more, and may be 300 mol-ppm or more.

The monomer mixture containing CTFE can be polymerized by a known polymerization method. The polymerization method is not limited, and may be a solution polymerization method, a suspension polymerization method, an emulsion polymerization method, etc. From the viewpoint of smooth manufacturing of PCTFE, the suspension polymerization method is preferable. Examples of the suspension polymerization method include a suspension polymerization method described in Japanese Patent Publication No. 47-44031.

In one embodiment, the polymerization can be performed by feeding the monomer mixture containing CTFE into a polymerization reactor, stirring the content in the reactor, holding a temperature of the reactor to be a predetermined polymerization temperature, and then adding a polymerization initiator to initiate the polymerization reaction. Before the polymerization reaction is initiated, a solvent, an additive, etc. may be fed into the reactor as necessary. After the polymerization reaction is initiated, a solvent, the monomer mixture, the polymerization initiator, a chain transfer agent, etc. may be additionally added according to the purpose.

The polymerization temperature for the monomer mixture containing CTFE is preferably 25°C or lower, more preferably 20°C or lower, and further preferably 15°C or lower in terms of furthermore improvement of the oxidation resistance of the obtained PCTFE.

A polymerization time for the monomer mixture containing CTFE is typically 1 to 60 hours.

Manufacturing PCTFE by the suspension polymerization typically yields a slurry of PCTFE, and thus, powder of PCTFE can be obtained by recovering the slurry from the reactor, and after-processes such as washing and drying as necessary.

### (Forming material)

The present disclosure also relates to a forming material containing the aforementioned PCTFE.

The form of the forming material of the present disclosure may be powder, a granule of powder, a particle, a flake, a pellet, a cube, or a bead, for example.

The forming material of the present disclosure may have an extremely low metal content. In one embodiment, the content of Co, Cr, Cu, Fe, Mn, and Ni in the forming material of the present disclosure is 500 mass-ppb or less, preferably 400 mass-ppb or less, more preferably 300 mass-ppb or less, further preferably 250 mass-ppb or less, furthermore preferably 220 mass-ppb or less, particularly preferably 200 mass-ppb or less, and may be 0.01 mass-ppb or more or 0.1 mass-ppb or more. The metal content in the forming material within the above range can inhibit metal contamination to a semiconductor even when a formed article obtained from the forming material is used as a component used in the semiconductor manufacturing field, for example.

Since the forming material of the present disclosure contains PCTFE with the low ratio ((A)/(B)) of the peak area (A) derived from the double bond relative to the peak area (B) derived from the main backbone, hydrogen fluoride and hydrogen chloride are hardly generated from PCTFE. Specifically, PCTFE obtained by polymerizing the monomer mixture having the low content of CF₂=CHCl and CF₂=CHF hardly generates hydrogen fluoride and hydrogen chloride. Therefore, even when metallic manufacturing equipment is used for manufacturing PCTFE or preparing the forming material, the manufacturing equipment hardly corrodes to consequently yield the forming material having the extremely low metal content.

As for the metal content in the forming material, 1 g of the forming material is accurately weighed and placed in a platinum crucible (platinum purity: 99.9%), the sample is subjected to ashing with a gas burner or the sample is subjected to ashing with an electric furnace at 500°C for 30 minutes, and then the ash content remained in the platinum crucible is dissolved in 10% nitric acid to obtain a solution. The obtained solution can be measured by using an ICP emission spectrometer (SPS3000, manufactured by Seiko Instruments Inc.) or a flameless atomic absorption spectrophotometer.

When the metal content in the forming material is extremely low (for example, when the metal content is less than 0.1 mass-ppb), the metal content may be measured by a method different from the above measuring method. For example, the metal content can be measured by an ashing method described in International Publication No. WO 94/28394. In the ashing method, the forming material is accurately weighed within a range of 2 to 6 mg, and heated in a cuvette made of graphite at 1100°C for 180 seconds to be ash, and the ash can be analyzed with an atomic absorption spectrometer (a polarization Zeeman atomic absorption spectrometer (Z-8100), manufactured by Hitachi, Ltd.).

The forming material of the present disclosure may contain additives such as, for example, an electrically conductive material, a reinforcing agent, a filler, an ultraviolet-ray absorbent, a thermal stabilizer, and a pigment.

### (Formed article)

A formed article can be obtained by forming the aforementioned PCTFE or the aforementioned forming material.

The forming method is not limited, and examples thereof include melting forming and known methods such as extrusion forming, injection molding, transfer molding, inflation forming, and compression molding. These forming methods are appropriately selected according to a shape of the obtained formed article.

The formed article of the present disclosure can be suitably utilized in the semiconductor manufacturing field, the chemical product manufacturing field, the electronic component manufacturing field, etc. The formed article of the present disclosure can be utilized as, for example: sealing materials such as a packing and a gasket; pump components such as a casing, an impeller, a valve, and a plug; tubes for a chemical solution; and component materials used with an extremely low-temperature fluid, such as a butterfly valve for extremely low temperature.

Since having the excellent oxidation resistance, the formed article of the present disclosure can be particularly suitably utilized as a member to contact with aqueous solutions such as sulfuric acid, hydrochloric acid, nitric acid, and hydrofluoric acid and chemical solutions such as aqueous hydrogen peroxide.

Since the formed article of the present disclosure has the excellent oxidation resistance, it can be particularly suitably utilized as a component to constitute a semiconductor manufacturing apparatus. Examples of such a component include peripheral components such as a turntable for treating a silicon wafer and a wafer guide, a guide for cleaning a silicon wafer, a coupler for chemical solution piping, valves, and joints. Examples of the turntable include a turntable for a semiconductor cleaning apparatus.

The embodiments have been described above, but it would be understood that the embodiments and the details can be variously modified without departing from the spirit and scope of the claims.
<1> A first viewpoint of the present disclosure provides
   a polychlorotrifluoroethylene comprising chlorotrifluoroethylene unit, wherein a content of chlorotrifluoroethylene unit is 95.0 to 100 mol% relative to all monomer units, and a ratio, (A)/(B), of a peak area (A) derived from a double bond relative to a peak area (B) derived from a main backbone is 0.020% or less.
<2> A second viewpoint of the present disclosure provides
   the polychlorotrifluoroethylene according to the first viewpoint, wherein a flow value is 0.3 to 2.5 × 10⁻³ cm³/sec.
<3> A third viewpoint of the present disclosure provides
   the polychlorotrifluoroethylene according to the first or second viewpoint, wherein the content of chlorotrifluoroethylene unit is 99.9 to 100 mol% relative to all the monomer units.
<4> A fourth viewpoint of the present disclosure provides
   a forming material comprising the polychlorotrifluoroethylene according to any one of the first to third viewpoints.
<5> A fifth viewpoint of the present disclosure provides
   the forming material according to the fourth viewpoint, wherein the forming material is a powder, a granule of a powder, a particle, a flake, a pellet, a cube, or a bead.
<6> A sixth viewpoint of the present disclosure provides
   the forming material according to the fourth or fifth viewpoint, wherein a content of Co, Cr, Cu, Fe, Mn, and Ni are 500 mass-ppb or less.
<7> A seventh viewpoint of the present disclosure provides
   a formed article obtained by forming the polychlorotrifluoroethylene according to the first or second viewpoint or the forming material according to any one of the fourth to sixth viewpoints.
<8> A eighth viewpoint of the present disclosure provides
   a method for manufacturing a polychlorotrifluoroethylene, the method comprising polymerizing a monomer mixture containing chlorotrifluoroethylene to manufacture the polychlorotrifluoroethylene, wherein a content of CF₂=CHCl and CF₂=CHF in the monomer mixture is 250 mol-ppm or less relative to the monomer mixture.
<9> A ninth viewpoint of the present disclosure provides
   the manufacturing method according to the eighth viewpoint, wherein the monomer mixture is prepared by distilling a crude composition containing chlorotrifluoroethylene to reduce the content of CF₂=CHCl and CF₂=CHF in the crude composition.
<10> A tenth viewpoint of the present disclosure provides
   the manufacturing method according to the eighth or ninth viewpoint, wherein a polymerization temperature is 25°C or lower.

### EXAMPLES

Next, the embodiments of the present disclosure will be described with Examples, but the present disclosure is not limited to only these Examples.

Each numerical value in Examples was measured by the following method.

### <Amount of impurity monomer in monomer mixture>

In the present Examples, the impurity monomer means CF₂=CHCl and CF₂=CHF. An amount of the impurity monomer (contents of CF₂=CHCl and CF₂=CHF) in the monomer mixture relative to CTFE in the monomer mixture was measured by using a gas chromatograph GC8A (manufactured by Shimadzu Corporation), a column with 3 mmϕ × 10 m made of SUS, and a filler Octoil S under conditions at a column temperature of 45°C, an indicator temperature of 80°C, a CARRIER pressure of 160 kPa, a CARRIER gas of He, and a sample amount of 1 cc.

A content of CTFE in the raw material monomer mixture was a value of contents of components other than CTFE, such as CF₂=CHCl and CF₂=CHF, subtracted from 100 mol%.

### <Flow value of PCTFE>

By using a Takashita-type flow tester CFT-500D (manufactured by Shimadzu Corporation), a volume of resin that flowed per second (cm³/sec) was measured under conditions at 230°C, a load of 980 N (100 kg), and a nozzle diameter of 1 mmϕ.

### <Ratio of peak areas ((A)/(B))>

A ¹⁹F-NMR spectrum of PCTFE was obtained by a melting ¹⁹F-NMR method. The measurement was performed by using a nuclear magnetic resonance apparatus AVANCE NEO 400 (manufactured by BRUKER) under conditions of 376.51 MHz, 240°C, and a cumulative number of measurement runs of 500.
Peak area (A): Sum of peak areas appearing within -144 to -153 ppm and -176 to -188 ppm
Peak area (B): Sum of peak areas appearing within -75 to -144 ppm

### <Fatigue test>

### (Production of test piece)

PCTFE was subjected to melt compression molding under conditions at 280°C for 20 minutes to produce a 1.5-mmt sheet, and the sheet was punched with an ASTM D638 type IV dumbbell to produce a test piece.

### (Immersion into piranha solution)

The test piece was disposed in a container, 30% hydrogen peroxide and 98% sulfuric acid were injected into the container so that a ratio between hydrogen peroxide and sulfuric acid was 1:3, and the test piece was immersed in the solution for 24 hours. After the immersion, the test piece was washed with flowing water, and the water content was wiped out.

### (Fatigue test)

By using the test piece immersed in the piranha solution and a fatigue tester EHF-LV020k1 (manufactured by Shimadzu Corporation), the test was performed under conditions with a tensile mode, R=0.1 (stress ratio R = minimum stress / maximum stress), a maximum stress being 60% of an yield point in a tensile test, and 5 Hz to measure a repeating number until the test piece ruptured. A test piece with a large rupture repeating number has excellent oxidation resistance.

### (Metal content)

As for a metal content of a pellet, 1 g of the pellet was accurately weighed and placed in a platinum crucible (platinum purity: 99.9%), the sample was subjected to ashing with a gas burner or the sample was subjected to ashing with an electric furnace at 500°C for 30 minutes, and then the ash content remained in the platinum crucible was dissolved in 10% nitric acid to obtain a solution. By using the obtained solution and an ICP emission spectrometer (SPS3000, manufactured by Seiko Instruments Inc.), the content of Co, Cr, Cu, Fe, Mn, and Ni was measured.

### Preparation Example 2 (Preparation of CTFE)

A raw material monomer mixture having the following compositional formulation was used.
CTFE content: 99.8 mol%
CF₂=CHF content: 300 mol-ppm
CF₂=CHCl content: 700 mol-ppm

The raw material monomer mixture was rectified to prepare a monomer mixture containing CTFE. The raw material monomer mixture was fed into a first rectifying tower at a rate of 175 kg/h. A fraction containing an impurity was distilled out from a column top of the first rectifying tower at a rate of 1 kg/h, and a fraction containing CTFE was distilled out from a column bottom of the first rectifying tower at a rate of 174 kg/h.

### First rectifying tower

Number of theoretical stages: 25 stages
Heating amount: 2,500 kcal/h
Reflux ratio: 147 mole
Pressure: 0.90 MPaG
Column top temperature: 38.1°C
Column bottom temperature: 41.0°C

The fraction distilled out from the column bottom of the first rectifying tower was then fed into a second rectifying tower at a rate of 174 kg/h. A fraction containing an impurity was distilled out from a column bottom of the second rectifying tower at a rate of 1 kg/h, and a fraction containing CTFE was distilled out from a column top of the second rectifying tower at a rate of 173 kg/h.

### Second rectifying tower

Number of theoretical stages: 50 stages
Heating amount: 60,000 kcal/h
Reflux ratio: 9 mole
Pressure: 0.45 MPaG
Column top temperature: 18.5°C
Column bottom temperature: 28.4°C

A total content of CF₂=CHCl and CF₂=CHF in the fraction distilled out from the column top of the second rectifying tower (the monomer mixture) was 80 mol-ppm.

### Preparation Example 8 (Preparation of CTFE)

A monomer mixture containing CTFE was prepared similarly to Preparation Example 2 except that the heating amount of the second rectifying tower was changed to 20,000 kcal/h, and the reflux ratio was changed to 2 mole. A total content of CF₂=CHCl and CF₂=CHF in the monomer mixture was 354 mol-ppm.

### Preparation Examples 1 and 3 to 7 (Preparation of CTFE)

The monomer mixtures obtained in Preparation Example 2 and Preparation Example 8 were mixed at predetermined ratios to prepare monomer mixtures having an impurity monomer amount described in Table 1.

### Example 1 (Manufacturing of PCTFE)

PCTFE was manufactured by using a suspension polymerization method described in Japanese Patent Publication No. 47-44031. The monomer mixture obtained in Preparation Example 1 was polymerized at a polymerization temperature of 12°C for a polymerization time of 42 hours to yield powder PCTFE. Table 1 shows the results.

### Examples 2 to 6 and Comparative Examples 1 to 2

Powder PCTFE was obtained similarly to Example 1 except that monomer mixtures obtained in Preparation Examples 2 to 8 were used instead of the monomer mixture obtained in Preparation Example 1 and that the monomer mixtures were polymerized at a polymerization temperature for a polymerization time described in Table 1. Table 1 shows the results.

The powder PCTFE was formed at 310°C by using an extruder to produce a pellet, and a metal content (a content of Co, Cr, Cu, Fe, Mn, and Ni) in the pellet was measured. Table 2 shows the results.

### [Table 1]

**Table 1**

| | Monomer mixture | | Polymerization conditions | | PCTFE | | Results |
|---|---|---|---|---|---|---|---|
| | Type | Impurity monomer amount (mol-ppm) | Polymerization temperature (°C) | Polymerization time (hours) | Flow value (x10⁻³ cm³/sec) | Ratio of peak area (A/B) (%) | Fatigue test (times) (x 10⁴) |
| Example 1 | Preparation Example 1 | 100 | 12 | 42 | 0.3 | 0.010 | 200 |
| Example 2 | Preparation Example 2 | 80 | 14 | 42 | 0.8 | 0.008 | 150 |
| Example 3 | Preparation Example 3 | 90 | 14 | 42 | 1.0 | 0.005 | 110 |
| Example 4 | Preparation Example 4 | 85 | 18 | 42 | 2.0 | 0.010 | 110 |
| Example 5 | Preparation Example 5 | 158 | 20 | 42 | 2.4 | 0.015 | 100 |
| Example 6 | Preparation Example 6 | 230 | 20 | 42 | 2.4 | 0.018 | 100 |
| Comparative Example 1 | Preparation Example 7 | 270 | 18 | 42 | 2.0 | 0.025 | 50 |
| Comparative Example 2 | Preparation Example 8 | 354 | 18 | 42 | 2.0 | 0.028 | 40 |

### [Table 2]

**Table 2**

| | Metal content (mass-ppb) |
|---|---|
| Example 2 | 54 |
| Example 5 | 251 |
| Example 6 | 368 |
| Comparative Example 1 | 622 |

## Claims

1. A polychlorotrifluoroethylene, comprising chlorotrifluoroethylene unit, wherein
a content of chlorotrifluoroethylene unit is 95.0 to 100 mol% relative to all monomer units, and
a ratio, (A)/(B), of a peak area (A) derived from a double bond relative to a peak area (B) derived from a main backbone is 0.020% or less.

2. The polychlorotrifluoroethylene according to claim 1, wherein a flow value is 0.3 to 2.5 × 10⁻³ cm³/sec.

3. The polychlorotrifluoroethylene according to claim 1 or 2, wherein the content of chlorotrifluoroethylene unit is 99.9 to 100 mol% relative to all the monomer units.

4. A forming material, comprising the polychlorotrifluoroethylene according to any one of claims 1 to 3.

5. The forming material according to claim 4, wherein the forming material is a powder, a granule of a powder, a particle, a flake, a pellet, a cube, or a bead.

6. The forming material according to claim 4 or 5, wherein a content of Co, Cr, Cu, Fe, Mn, and Ni is 500 mass-ppb or less.

7. A formed article obtained by forming the polychlorotrifluoroethylene according to any one of claims 1 to 3 or the forming material according to any one of claims 4 to 6.

8. A method for manufacturing a polychlorotrifluoroethylene, the method comprising polymerizing a monomer mixture containing chlorotrifluoroethylene to manufacture the polychlorotrifluoroethylene, wherein
a content of CF₂=CHCl and CF₂=CHF in the monomer mixture is 250 mol-ppm or less relative to the monomer mixture.

9. The manufacturing method according to claim 8, wherein the monomer mixture is prepared by distilling a crude composition containing chlorotrifluoroethylene to reduce the content of CF₂=CHCl and CF₂=CHF in the crude composition.

10. The manufacturing method according to claim 8 or 9, wherein a polymerization temperature is 25°C or lower.
